Europäisches Patentamt

European Patent Office

Office européen des brevets

(19)

(11) **EP 0 547 974 B1**

(12) **FASCICULE DE BREVET EUROPEEN**

(45) Date de publication et mention
de la délivrance du brevet:
**11.03.1998 Bulletin 1998/11**

(51) Int Cl.6: **G06F 15/80**

(21) Numéro de dépôt: **92403456.4**

(22) Date de dépôt: **17.12.1992**

(54) **Procédé de classification des architectures d'ordinateur**

Klassifizierungsverfahren für Rechnerarchitekturen

Computer architecture classification method

(84) Etats contractants désignés:
**DE ES FR GB IT**

(30) Priorité: **19.12.1991 FR 9115812**

(43) Date de publication de la demande:
**23.06.1993 Bulletin 1993/25**

(73) Titulaire: **BULL S.A.**
**92800 Puteaux (FR)**

(72) Inventeur: **Andres, Frédéric**
**F-75015 Paris (FR)**

(74) Mandataire: **Colombe, Michel et al**
**Direction de la Propriété Intellectuelle BULL SA**
**Poste courrier:LV 59C18**
**68 route de Versailles**
**78430 Louveciennes (FR)**

(56) Documents cités:
- **KAI HWANG, BRIGGS F.A. 'Computer Architecture and Parallel Processing' 1984 , MCGRAW HILL , NEW YORK, U.S.A.**
- **PROCEEDINGS OF THE 1977 INTERNATIONAL CONFERENCE ON PARALLEL PROCESSING 1977, WASHINGTON, D.C., U.S. pages 7 - 15 H[NDLER 'THE IMPACT OF CLASSIFICATION SCHEMES ON COMPUTER ARCHITECTURE'**
- **PROCEEDINGS OF THE INTERNATIONAL WORKSHOP ON ARTIFICIAL INTELLIGENCE FOR INDUSTRIAL APPLICATIONS vol. 1, 27 Mai 1988, HITACHI CITY, JAPAN pages 232-236 SCHERF 'KNOWLEDGE-BASED PERFORMANCE EVALUATION OF COMPUTER ARCHTICTURES'**

## Description

La présente invention concerne un procédé de classification des architectures d'ordinateurs pour l'utilisation dans la bibliothèque de définition d'architectures utilisée lors de l'éxécution d'un programme évaluateur de performance dont un aperçu est donné dans "Proceedings of the International Workshop on Artificial Intelligence for Industrial Applications" vol. 1, 27 Mai 1988 - Pages 232-236.

Lorsque l'on utilise un programme évaluateur de performance, soit pour déterminer le coût d'une requête définie, soit pour évaluer le système optimum adapté au type d'utilisation que l'on souhaite faire (ex: application fixée, SGDB fixé, operating système fixé), il est nécessaire de paramétrer une bibliothèque contenant les caractéristiques de l'architecture du système pour lequel l'évaluation va être effectuée. Dans cette définition de l'architecture, un problème va se poser à l'utilisateur sur la détermination de la classification de l'architecture en modèle distribuée ou en modèle en 'mémoire partagée. Cette classification a une répercussion sur la méthode d'évaluation utilisée.

Un premier but de l'invention est donc de proposer un procédé qui permette d'effectuer à partir de la description du système une classification automatisée de l'architecture en vue de son utilisation dans une bibliothèque d'architecture d'un évaluateur.

Ce premier but est atteint par le fait que le procédé de classification des architectures d'ordinateur en vue d'une évaluation de performance, ledit ordinateur étant constitué de plusieurs processeurs mis en relation avec une ou plusieurs mémoires à travers un ou plusieurs réseaux d'interconnexion (ex : bus) consiste à, d'une part évaluer le nombre de communications locales entre une mémoire et un processeur et d'autre part évaluer le nombre de communications partagées entre le processeur et plusieurs mémoires, à déterminer un coefficient de portée par le calcul du rapport entre le nombre de communications locales sur le nombre de communications partagées.

Selon une autre particularité, le procédé comporte une étape de détermination de l'équivalence des architectures de même portée consistant à déterminer un coefficient de portée pondéré en calculant le rapport entre la somme des tailles mémoire des communications locales sur la somme des tailles mémoire des communications partagées ;

à comparer les coefficients de portée pondérée ;

à considérer comme équivalentes des architectures de même coefficient de portée pondérée.

Selon une autre particularité, le procédé consiste en outre à comparer la valeur du coefficient de portée ou de portée pondérée par rapport à la valeur 1.

Selon une autre particularité, le procédé consiste à considérer l'architecture comme distribuée si le coefficient de portée est supérieur à 1 et comme partagée si le coefficient de portée est inférieur à 1.

Un autre but est de proposer une utilisation du procédé dans un programme évaluateur de performance.

Selon une autre particularité, le procédé consiste à mémoriser cette information dans la mémoire du système éxécutant le programme évaluateur à l'adresse de la bibliothèque de description de l'architecture du système pour lequel la classification est effectuée.

Selon une autre particularité, le procédé consiste à mémoriser dans la mémoire du système les liens avec les architectures de même type (distribuée et partagée) qui sont considérées comme équivalentes.

Selon une autre particularité, la description du système dont on veut classifier l'architecture est rentrée sous forme de schéma affiché à l'écran du système sur lequel le programme est exécuté, les mémoires de description du système étant représentées par des objets à l'intérieur desquels les valeurs des tailles mémoires correspondant au schéma sont inscrites et des moyens déterminent automatiquement en fonction de la description les types de communication associées aux mémoires pour calculer les coefficients de portée et de portée pondérée.

Selon une autre particularité, la description du système est entrée au clavier du système informatique servant à l'éxécution en utilisant un langage de description spécifique (ESL environnement spécification language).

D'autres particularités et avantages de la présente invention apparaitront plus clairement à la lecture de la description ci-après faite en référence aux dessins annexés dans lesquels :

La figure 1 représente un schéma représentatif d'un exemple d'architecture pour laquelle la classification est recherchée ;

La figure 2 représente un schéma représentatif d'un deuxième exemple d'une architecture pour laquelle la classification est recherchée ;

La figure 3 représente un schéma représentatif d'un troisième exemple d'architecture pour laquelle la classification est recherchée ;

La figure 4 représente un schéma représentatif d'un quatrième exemple d'architecture pour laquelle la classification est recherchée ;

La figure 5 représente schématiquement la classification des différentes architectures des figures 1 à 4 selon le mode partagé et distribué, et les architectures équivalentes dans un mode donné.

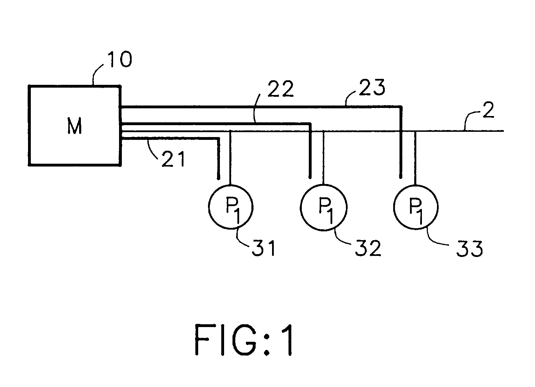

La figure 1 représente un premier exemple d'architecture d'un système informatique dans lequel une mémoire (10) de taille M est reliée par un bus (2) à trois processeurs (31,32,33) qui se partagent cette mémoire. Une telle architecture est dite massivement partagée. Dans un cas aussi simple, il n'est peut être pas nécessaire d'avoir une méthode et un procédé de classification d'architecture, mais dans des cas plus complexes représentés aux figures suivantes, la méthode trouve toute son utilité.

Pour analyser une architecture du type de celle de la figure 1, on détermine les communications locales qui représentent les communications entre une mémoire et un processeur et les communications partagées dans lesquelles une mémoire communique avec plusieurs processeurs. Dans le cas de la figure 1, il existe trois communications partagées COPA (21,22,23) entre respectivement les processeurs (31,32,33) et la mémoire (10). L'architecture de la figure 1 ne comporte aucune communication locale. La méthode de classification consiste à déterminer un coefficient de portée qui est le rapport entre la somme des communications locales par la somme des communications partagées. Ce coefficient de portée CP dans le cas de la figure 1 est nul. Pour déterminer si la mémoire et l'architecture est de type distribué ou de type partagé, on compare ensuite ce coefficient de portée avec la valeur 1. Si ce coefficient de portée est inférieur à 1, l'architecture est dite partagée, si le coefficient de portée est supérieure à 1, l'architecture est dite distribuée. Le procédé consiste également dans une étape ultérieure à calculer un coefficient de portée pondéré constitué par la somme des tailles mémoire qui sont en communication locale et à diviser cette valeur par la somme des tailles mémoire en communication partagée. Ce coefficient de portée pondéré CPP ainsi obtenu permet de déterminer pour des architectures différentes tombant dans le même type de classification si ces architectures sont équivalentes. On comprendra mieux à la lumière des exemples des figures suivantes, l'utilité des coefficients de portée et des coefficients de portée pondéré.

Dans le cas de la figure 1, le coefficient de portée pondéré est également nul.

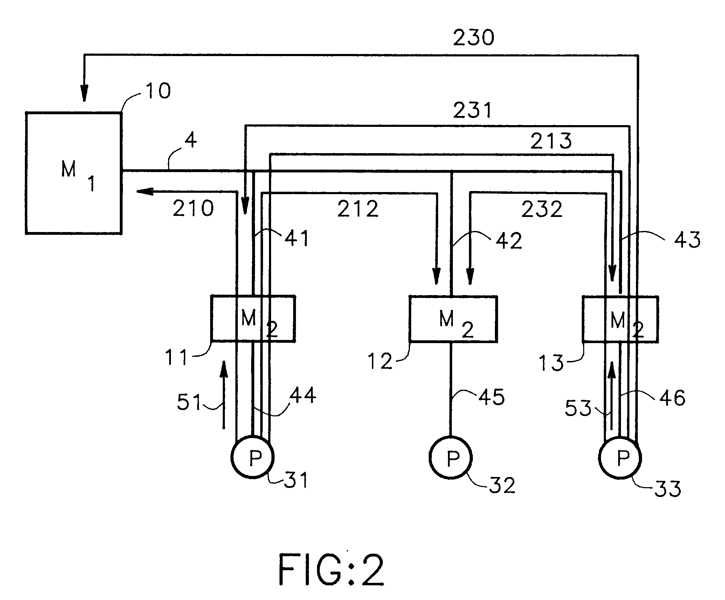

Le deuxième exemple d'architecture représenté à la figure 2 est constitué d'une mémoire (10) de taille M1 communicant par un bus (4) avec un ensemble de trois mémoires de taille M2 (11) respectivement (12), respectivement (13) reliées au bus 4 par les liaisons (41), respectivement (42), respectivement (43). Ces mémoires de tailles M2 (11,12,13) sont elles-mêmes reliées à trois processeurs (31) respectivement (32), respectivement (33) par des liaisons respectives (44,45,46). Ainsi sur cette architecture le processeur (31) est relié d'une part à la mémoire (11) par une communication locale (51), et d'autre part aux autres mémoires de même taille par les communications partagées (212, 213) et à la mémoire (10) de taille M1 par la communication partagée (210). Ainsi, un processeur (31) est relié d'une part par une communication locale à une mémoire de taille M2, d'autre part par deux communications partagées à deux mémoires de taille M2 et par une troisième communication partagée à une mémoire de taille M1.

En conséquence, le coefficient de portée est égal à 3 sur 9. Trois communications locales pour les trois processeurs (31,32,33) et 9 communications partagées pour les 3 processeurs.

Le coefficient de portée :

$$\frac{3}{9} = 1/3 = CP$$

Le coefficient de portée pondéré est égal à :

$$CPP = \frac{3M_2}{3M_1 + 6M_2}$$

Si la taille $M_1$ est 50 Méga-octets et la taille $M_2$ de 1 Méga-octet,

$$CPP = \frac{3}{50 \times 3 + 6} = \frac{3}{156} = 0019$$

Ceci constitue le cas 2a.

Si les tailles mémoires M1 sont de 1 méga-octet et M2 de 50 méga-octets, le coefficient de portée pondéré devient :

$$CPP = \frac{50 \times 3}{6 \times 50 + 3} = \frac{150}{303} = 0,495$$

Ceci constitue le coefficient de portée pondéré du cas 2b.

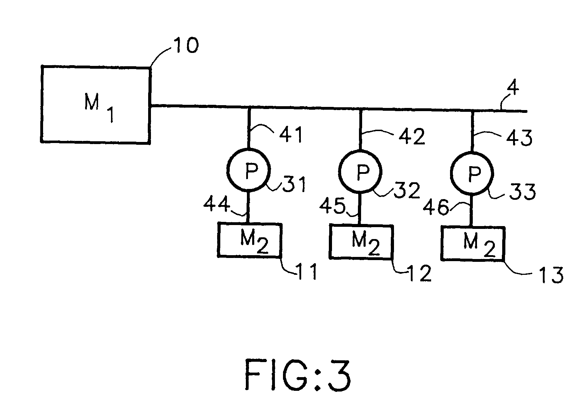

L'architecture représentée à la figure 3 est constituée d'une mémoire de (10) de taille M1 reliée par un bus (4) et ses prolongements (41,42,43) à respectivement trois processeurs (31,32,33). Chacun des processeurs est relié par une liaison respective (44,45,46) à une mémoire de taille de M2 respectivement (11,12,13). Pour ce type d'architecture, un processeur donné (31, respectivement 32, respectivement 33) a une seule communication locale (33,11, respectivement 32,12, respectivement 33,13). Chaque processeur (31, respectivement 32,33) a également une seule communication partagée (31,10, respectivement 32,10, respectivement 33,10). En effet, le processeur (32) ne peut pas communiquer avec la mémoire (11) sans passer par le processeur (31). L'architecture a donc trois communications locales et trois communications partagées et le coefficient de portée est donc égale à 1. Le coefficient de portée pondéré CPP sera égal au rapport M2 sur M1. Si la taille M2 est inférieure à la taille M1, le coefficient de portée pondéré sera inférieur à 1 et l'architecture sera plutôt à mémoire partagée. Ainsi pour le cas 3a où M2 est égal à 1 méga-octet et M1 égal 50 méga-octets, le coefficient CPP du cas 3a sera égal à 0,02.

Si la taille M2 est supérieure à la taille M1, ce coefficient de portée pondéré sera supérieur à 1 et l'architecture sera plutôt à mémoire distribuée.

Dans le cas 3b où M2 égal 50 méga-octets et M1 1 méga-octet, le coefficient CPP du cas 3b sera égal à 50.

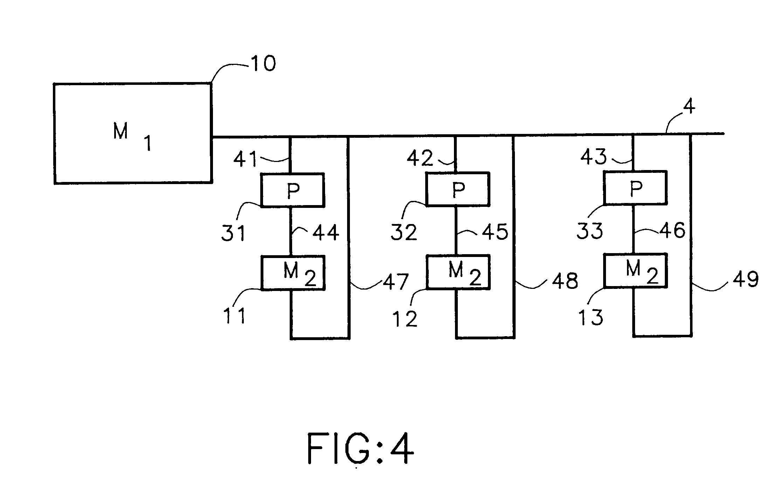

La figure 4 représente un dernier exemple d'architecture dans lequel une mémoire 10 de taille M1 est relié par un bus 4 et les liaisons (41,42,43) à respectivement 3 processeurs (31,32,33). Chacun des processeurs est relié par une liaison respective (44,45,46) à une mémoire de taille M2 (11, respectivement 12, respectivement 13). Chaque mémoire de taille M2 est reliée elle-même par une liaison respectivement (47,48,49) au bus 4.

Une telle architecture permet donc pour un processeur (31) d'avoir une liaison locale avec la mémoire de type M2 qui lui est associée respectivement (11) et trois liaisons partagées dont une avec le mémoire de type M1 (10) et deux avec les mémoires (12, respectivement 13) associées aux autres processeurs de type M2 (32,33). L'ensemble de l'architecture réalise donc trois liaisons locales M2, trois liaisons partagées M1 et 6 communications partagées M2. CP est égal à 1/3 .

$$\text{Le coefficient CPP} = \frac{3M_2}{3M_1 + 6M_2}$$

Le coefficient de portée pondérée dans le cas 4A où la mémoire M1 est de 50 Méga-octets, les mémoires M2 de 1 méga-octets sera de :

$$CPP = \frac{3}{50 \text{ x } 3 + 6} = \frac{3}{156} = 0,019$$

Dans le cas 4B où M2 = 50 Méga-octets et M1 = 1 Méga-octet, le coefficient de portée pondérée CPP sera :

$$CPP = \frac{150}{3 + 6 \text{ x } 50} = \frac{150}{353} = 0,425$$

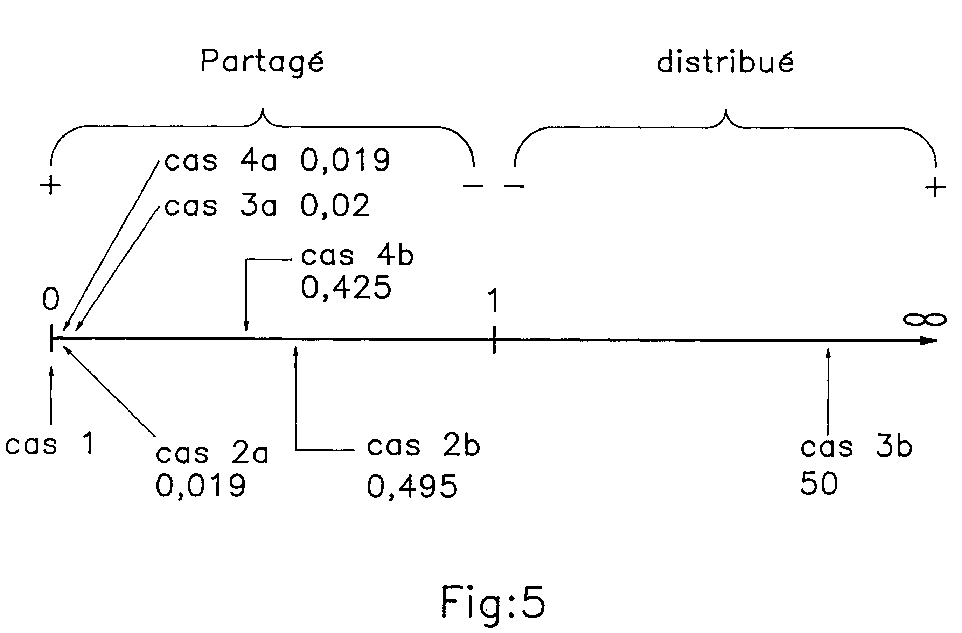

En plaçant les différentes valeurs obtenues pour chacun des cas étudiés, sur l'axe gradué de la figure 5, entre les valeurs 0 et l'infini et ayant pour valeur frontière la valeur 1, on constate que les cas 1,2,4, et 3a sont du type plutôt partagé et le cas 3b est du type distribué et que les cas 2a et 4a sont équivalent puisque les CPP sont égaux, et le cas 3a est pratiquement équivalent aux deux précédent. Cette méthode permet donc d'instaurer une classification en architecture de type partagée ou distribuée et te mémoriser le résultat de cette classification dans la bibliothèque d'architecture de la mémoire du système qui utilisera ce résultat pour par la suite effectuer une évaluation de performance de l'architecture décrite.

L'architecture décrite peut être rentrée sous forme graphique par des objets associés aux mémoires à représenter comme des rectangles et à l'intérieur desquelles les valeurs des tailles mémoires sont inscrites. Des traits représentent les liaisons entre les mémoires et les processeurs qui eux-mêmes sont représentés par d'autre objets tels que des cercles.

Un logiciel examine ensuite les différentes communications et les classe en type local ou partagé, puis détermine par calcul les coefficients.

Une autre possibilité consiste à rentrer directement au clavier le nombre de communications locales et de communications de type partagé ainsi que les tailles mémoires associées à ces communications de portée et de portée pondérée.

Le logiciel calculant par la suite tout seul, les coefficients CP et CPP, et rangeant le résultat en mémoire après avoir fait la comparaison avec la valeur 1 pour déterminer si l'architecture est de type partagée ou distribuée et classant dans une même zone les architectures de même type qui sont considérées comme équivalentes par comparaison des CPP dans un type d'architecture donné.

D'autres modifications à la portée de l'homme de métier font également partie de l'invention.

**Revendications**

1. Procédé de classification des architectures d'un ordinateur, ledit procédé étant destiné à paramétrer une bibliothèque de description d'architectures, l'une de ces architectures s'appliquant audit ordinateur pour lequel une évaluation de performance est à effectuer, ledit ordinateur étant constitué de plusieurs processeurs mis en relation avec une ou plusieurs mémoires à travers des réseaux d'interconnexion caractérisé en ce qu'il consiste à d'une part évaluer le nombre de communications locales entre une mémoire et un processeur et d'autre part évaluer le nombre de communications partagées entre un processeur et plusieurs mémoires,

à déterminer un coefficient de portée par le calcul du rapport entre le nombre de communications locales sur le nombre de communications partagées.

2. Procédé selon la revendication 1 caractérisé en ce qu'il comporte une étape de détermination de l'équivalence des architectures de même portée consistant à déterminer un coefficient de portée pondéré en calculant le rapport entre la somme des tailles mémoire des communications locales sur la somme des tailles mémoire des communications partagées ;

à comparer les coefficients de portée pondérée ;

à considérer comme équivalentes des architectures de même coefficient de portée pondérée.

3. Procédé selon la revendication 1 ou 2 caractérisé en ce qu'il consiste en outre à comparer la valeur du coefficient de portée ou de portée pondérée par rapport à la valeur 1.

4. Procédé selon la revendication 3 caractérisé en ce qu'il consiste à considérer l'architecture comme distribuée si le coefficient de portée est supérieur à 1 et comme partagée si le coefficient de portée est inférieur à 1.

5. Procédé selon la revendication 4 caractérisé en ce qu'il consiste à mémoriser cette information dans la mémoire du système éxécutant un programme évaluateur de performance faisant appel à ladite bibliothèque de description d'architectures à l'adresse de la bibliothèque de description de l'architecture de l'ordinateur pour lequel la classification est effectuée.

6. Procédé selon une des revendications précédentes caractérisé en ce qu'il consiste à mémoriser dans la mémoire du système les liens avec les architectures de même type (distribuée et partagée) qui sont considérées comme équivalentes.

7. Procédé selon une des revendications précédentes caractérisé en ce que la description du système dont on veut classifier l'architecture est rentrée sous forme de schéma affiché à l'écran du système sur lequel le programme est exécuté, les mémoires de description du système à classifier étant représentées par des objets à l'intérieur desquels les valeurs des tailles mémoires correspondant au schéma sont inscrites et des moyens déterminent automatiquement les types de communication associées aux mémoires pour calculer les coefficient de portée et de portée pondérée.

8. Procédé selon la revendication 7 caractérisé en ce que la description du système est entrée au clavier du système informatique servant à l'éxécution en utilisant un langage de description spécifique.

**Patentansprüche**

1. Verfahren zum Klassifizieren der Architekturen eines Rechners, wobei das Verfahren dazu vorgesehen ist, eine Bibliothek für die Beschreibung von Architekturen zu parametrisieren, wobei eine dieser Architekturen dem Rechner entspricht, für den eine Bewertung seiner Leistung ausgeführt werden soll, wobei der Rechner aus mehreren Prozessoren gebildet ist, die mit einem oder mehreren Speichern über Verbindungsnetze in Beziehung gesetzt sind, dadurch gekennzeichnet, daß es darin besteht, einerseits die Anzahl der lokalen Nachrichtenaustauschvorgänge zwischen einem Speicher und einem Prozessor zu bewerten und andererseits die Anzahl der Nachrichtenaustauschvorgänge zu bewerten, die von einem Prozessor und mehreren Speichern gemeinsam genutzt werden,

durch Berechnen des Verhältnisses zwischen der Anzahl lokaler Nachrichtenaustauschvorgänge und der Anzahl der gemeinsam genutzten Nachrichtenaustauschvorgänge einen Reichweitenkoeffizienten zu bestimmen.

2. Verfahren nach Anspruch 1, dadurch gekennzeichnet, daß es einen Schritt des Bestimmens der Äquivalenz der Architekturen mit gleicher Reichweite enthält, der darin besteht, einen gewichteten Reichweitenkoeffizienten zu bestimmen, indem das Verhältnis zwischen der Summe der Speichergrößen der lokalen Nachrichtenaustauschvorgänge und der Summe der

Speichergrößen der gemeinsam genutzten Nachrichtenaustauschvorgänge berechnet wird;

die gewichteten Reichweitenkoeffizienten zu vergleichen;

Architekturen mit gleichem gewichteten Reichweitenkoeffizienten als äquivalent anzusehen.

3. Verfahren nach Anspruch 1 oder 2, dadurch gekennzeichnet daß es außerdem darin besteht, den Wert des Reichweitenkoeffizienten oder des gewichteten Reichweitenkoeffizienten mit dem Wert 1 zu vergleichen.

4. Verfahren nach Anspruch 3, dadurch gekennzeichnet, daß es darin besteht, die Architektur als verteilte Architektur anzusehen, wenn der Reichweitenkoeffizient größer als 1 ist, und als gemeinsam genutzt anzusehen, wenn der Reichweitenkoeffizient kleiner als 1 ist.

5. Verfahren nach Anspruch 4, dadurch gekennzeichnet, daß es darin besteht, diese Informationen im Speicher des Systems zu speichern, das ein Leistungsbewertungsprogramm ausführt, das auf die Architekturbeschreibungsbibliothek bei der Adresse der Bibliothek für die Beschreibung der Architektur desjenigen Rechners zugreift, für den die Klassifikation ausgeführt wird.

6. Verfahren nach einem der vorangehenden Ansprüche, dadurch gekennzeichnet, daß es darin besteht, im Systemspeicher die Verbindungen mit den Architekturen desselben Typs (verteilt oder gemeinsam genutzt), die als äquivalent angesehen werden, zu speichern.

7. Verfahren nach einem der vorangehenden Ansprüche, dadurch gekennzeichnet, daß die Beschreibung des Systems, dessen Architektur klassifiziert werden soll, in Form eines Schemas erfolgt, das auf dem Bildschirm des Systems angezeigt wird, in dem das Programm ausgeführt wird, wobei die Speicher für die Beschreibung des zu klassifizierenden Systems durch Objekte repräsentiert werden, in die die Werte des Speichergrößen, die dem Schema entsprechen, eingeschrieben sind, und Mittel automatisch die Typen von Nachrichtenaustauschvorgängen bestimmen, die den Speichern zugeordnet sind, um den Reichweitenkoeffizienten und den gewichteten Reichweitenkoeffizienten zu berechnen.

8. Verfahren nach Anspruch 7, dadurch gekennzeichnet, daß die Beschreibung des Systems über die Tastatur des Datenverarbeitungssystems, in dem die Ausführung erfolgt, unter Verwendung einer spezifischen Beschreibungssprache eingegeben wird.

**Claims**

1. Method of classification of the architectures of a computer, said method being intended to assign parameters to a description library of architectures, one of these architectures being applied to said computer for which a performance evaluation is to be carried out, said computer being constituted by several processors put into relationship with one or more memories through interconnection networks, characterised in that it consists on the one hand in evaluating the number of local communications between a memory and a processor and on the other hand of evaluating the number of shared communications between a processor and several memories,

in determining a coefficient of scope by calculating the ratio between the number of local communications and the number of shared communications.

2. Method according to Claim 1 characterised in that it comprises a stage of determining the equivalence of architectures of the same scope consisting in determining a weighted coefficient of scope by calculating the ratio between the sum of memory sizes of the local communications and the sum of memory sizes of the shared communications;

in comparing the coefficients of weighted scope;

in considering architectures of the same coefficient of weighted scope to be equivalent.

3. Method according to Claim 1 or 2 characterised in that it further consists in comparing the value of the coefficient of scope or of weighted scope in relation to the value 1.

4. Method according to Claim 3 characterised in that it consists in considering the architecture as being distributed if the coefficient of scope is greater than 1 and as shared if the coefficient of scope is less than 1.

5. Method according to Claim 4 characterised in that it consists in storing this information in the memory of the system executing a performance-evaluating program calling on said description library of architectures at the address in the description library of the architecture of the computer for which the classification is carried out.

6. Method according to one of the preceding claims, characterised in that it consists in storing in the memory of the system the links with architectures of the same type (distributed and shared) that are considered as being equivalent.

7. Method according to one of the preceding claims, characterised in that the description of the system for which it is wished to classify the architecture is entered in the form of a diagram displayed on the screen of the system on which the program is being executed, the description memories of the system to be classified being represented by objects within which the values of the memory sizes corresponding to the diagram are recorded and means automatically determine the types of communication associated with the memories in order to calculate the coefficients of scope and of weighted scope.

8. Method according to Claim 7 characterised in that the description of the system is entered on the keyboard of the information-processing system serving for execution by using a specific descriptive language.

FIG:1

EP 0 547 974 B1

FIG:2

EP 0 547 974 B1

FIG:3

FIG:4

EP 0 547 974 B1

Partage

distribué

cas 4a 0,019

cas 3a 0,02

+

−  −

+

cas 4b
0,425

0

1

∞

cas 1

cas 2a
0,019

cas 2b
0,495

cas 3b
50

EP 0 547 974 B1

Fig:5